# EUROPÄISCHE PATENTSCHRIFT

(11) **EP 2 949 057 B1**
(45) Veröffentlichungstag und Bekanntmachung des Hinweises auf die Patenterteilung: **12.09.2018**
(21) Anmeldenummer: 13814829.1
(22) Anmeldetag: 13.12.2013
(51) Int. Cl.: H04B 10/112, G01B 11/26, H04B 10/116, H04B 10/00

(54) **SYSTEM FÜR EINE ANLAGE UND VERFAHREN ZUM BETREIBEN EINES SYSTEMS**
SYSTEM FOR AN INSTALLATION AND METHOD FOR OPERATING A SYSTEM
SYSTÈME POUR INSTALLATION ET PROCÉDÉ POUR FAIRE FONCTIONNER UN SYSTÈME

(30) Priorität: 28.01.2013 DE 102013001358
(43) Veröffentlichungstag der Anmeldung: 02.12.2015
(73) Patentinhaber: Sew-Eurodrive GmbH & Co. KG, 76646 Bruchsal (DE)
(72) Erfinder: HUA, Zhidong, 76137 Karlsruhe (DE); KEPPLER, Christoph Steffen, 76189 Karlsruhe (DE)
(86) Internationale Anmeldenummer: PCT/EP2013/003777
(87) Internationale Veröffentlichungsnummer: WO 2014/114315

(56) Entgegenhaltungen:
- EP-A1- 2 187 178
- DE-A1-102010 036 521
- US-A1- 2005 129 410
- US-A1- 2008 292 320

## Beschreibung

Die Erfindung betrifft ein System für eine Anlage und ein Verfahren zum Betreiben eines Systems.

Es ist allgemein bekannt, dass eine Anlage Beleuchtungsmittel zur Beleuchtung des Innenraums aufweist.

Aus der US 2005/129410 A1 ist als nächstliegender Stand der Technik ein optisches Kommunikationssystem für Fahrzeuge bekannt.

Aus der US 2008 / 0292320 A1 ist ein Kommunikationssystem bekannt, das ein mit LED-Licht funktionierendes globales Positionieren sowie ein Weiterleiten von Informationen aufweist.

Aus der EP 2 187 178 A1 ist ein Verfahren zur Messung des Drehwinkels eines rotierenden Objekts bekannt.

Aus der DE 10 2010 036 521 A1 ist eine Vorrichtung zur Übertragung von Daten zwischen zwei Schienenfahrzeugen bekannt.

Der Erfindung liegt daher die Aufgabe zugrunde, eine Anlage mit berührungsloser Datenübertragung weiterzubilden.

Erfindungsgemäß wird die Aufgabe bei der Anlage nach den in Anspruch 1 und bei dem Verfahren nach den in Anspruch 12 angegebenen Merkmalen gelöst.

Wichtige Merkmale der Erfindung bei dem System für eine Anlage sind, dass es stationär angeordnete Sende-Empfangsmodule und ein Fahrzeug mit Sende-Empfangsmodul aufweist,
**wobei** das jeweilige Sende-Empfangsmodul eine steuerbare Lichtquelle und einen Lichtsensor aufweist, so dass eine Datenübertragung zwischen dem Fahrzeug und den stationär angeordneten Modulen ausführbar ist.

Von Vorteil ist dabei, dass die zur Beleuchtung vorgesehenen Lichtquellen auch zur Datenübertragung verwendbar sind. Außerdem ist die Datenübertragung vorzugsweise in vertikaler Richtung ausführbar, wobei in dieser Richtung keine Hindernisse für Licht vorhanden sind. Durch Modulation des Lichts ist eine Unempfindlichkeit gegen Störstrahler erreichbar.

Bei einer vorteilhaften Ausgestaltung ist das verwendete Licht sichtbares Licht oder Infrarotlicht. Von Vorteil ist dabei, dass einfache kostengünstige Sensoren, insbesondere Photodioden oder Phototransistoren, und Lichtquellen, insbesondere LED, verwendbar sind. Jeweils sind hierbei Arrays verwendbar, also eine Vielzahl von elektrisch zusammengeschalteten Lichtquellen und/oder Sensoren.

Bei einer vorteilhaften Ausgestaltung ist die Datenübertragung bidirektional ausführbar. Von Vorteil ist dabei, dass ein Datenbus berührungslos realisierbar ist.

Bei einer vorteilhaften Ausgestaltung überlappt die von einem jeweiligen Modul ausgesendeten Lichtkegel mit dem Lichtkegel eines weiteren Moduls. Von Vorteil ist dabei, dass bei der Positionsbestimmung eine höhere Auflösung erreichbar ist.

Bei einer vorteilhaften Ausgestaltung weist das Fahrzeug einen Speicher auf, in welchem die Positionen der stationär angeordneten Module und/oder die den Positionen zugeordneten Zonen, also Positionsbereiche, gespeichert sind,
wobei die stationär angeordneten Module jeweils Identitätsinformation übertragen an das Fahrzeug, so dass das Fahrzeug aus der Identitätsinformation des stationären Moduls die gespeicherte Position oder die zugeordnete Zone ermittelt. Von Vorteil ist dabei, dass aufgrund der empfangenen Identitätsinformation der Sender und mittels der Landkarte auch dessen Position samt Lichtkegel bestimmbar ist. Auf diese Weise ist ein Positionsbereich bestimmbar, in welchem sich das Fahrzeug befindet. Bei Überlappung der Sendekegel mehrerer Sender ist eine höhere Auflösung erreichbar, also genauerer Positionsbereich bestimmbar.

Erfindungsgemäß unterscheidet sich jedes Modul zwei Polarisationsfolien aufweist, deren Polarisationsrichtung,
wobei die erste der Polarisationsfolien eine erste steuerbare Lichtquelle und einen ersten Lichtsensor abdeckt und die zweite der Polarisationsfolien eine zweite steuerbare Lichtquelle und einen zweiten Lichtsensor abdeckt. Von Vorteil ist dabei, dass die Ausrichtung des Fahrzeugs in einfacher Weise detektierbar ist.

Bei einer vorteilhaften Ausgestaltung ist stationär und/oder am Fahrzeug ein Mittel zur Bestimmung der Ausrichtung angeordnet, insbesondere wobei das Mittel ein Auswertemittel aufweist, dem die Signale eines ersten und eines zweiten Lichtsensors zugeführt werden. Von Vorteil ist dabei, dass die Ausrichtung anhand der polarisierten Strahlung bestimmbar ist.

Bei einer vorteilhaften Ausgestaltung wird zur Datenübertragung die Lichtintensität einer jeweiligen steuerbaren Lichtquelle moduliert,
insbesondere mit einer Frequenz zwischen 100 kHz und 10 MHz. Von Vorteil ist dabei, dass mit dem menschlichen Auge nur die Beleuchtung erkennbar ist und gleichzeitig eine hohe datenübertragungsrate erreichbar ist..

Bei einer vorteilhaften Ausgestaltung fungieren die stationär angeordneten, steuerbaren Lichtquellen auch als Beleuchtung der Anlage. Von Vorteil ist dabei, dass das Sendemittel für die Datenübertragung gleichzeitig auch als Beleuchtungsmittel einsetzbar ist.

Bei einer vorteilhaften Ausgestaltung ist das am Fahrzeug angeordnete Modul an der Oberseite des Fahrzeugs angeordnet. Von Vorteil ist dabei, dass in vertikaler Richtung zwischen Sender und Empfänger keine Hindernisse vorhanden sind.

Bei einer vorteilhaften Ausgestaltung sind die stationär angeordneten steuerbaren Lichtquellen aus einem elektrischen Kabel versorgt, das einen ersten Stromanteil zur Energieversorgung der Lichtquellen aufweist und einen höher frequent als die Frequenz des ersten Stromanteils aufmodulierten zweiten Stromanteil zur Datenübertragung,
wobei das Kabel mit einer zentralen Steuerung verbunden ist. Von Vorteil ist dabei, dass Signalübertragungsleitungen einsparbar sind.

Wichtige Merkmale bei dem Verfahren zum Betreiben eines Systems sind, dass zwischen dem Fahrzeug und einem der stationär angeordneten Module Daten übertragen werden mittels Lichtmodulation
und/oder von allen stationär angeordneten Modulen gleichzeitig ein Synchronisationssignal gesendet wird, insbesondere für Fahrzeuge oder stationär angeordnete Maschinen, wobei die Fahrzeuge und Maschinen jeweils einen Lichtsensor zum Detektieren des von einer oder mehreren steuerbare Lichtquellen des jeweiligen Moduls gesendeten Lichts aufweisen.

Von Vorteil ist dabei, dass Daten und Synchronisationsspule in einfacher Weise übertragbar sind, insbesondere an Fahrzeuge und an stationär angeordnete Maschinen.

Erfindungsgemäß wird von einem stationär angeordneten Modul polarisiertes Licht gesendet,
wobei am Fahrzeug ein Mittel zur Bestimmung der Polarisationsrichtung des Lichts angeordnet ist, wobei das Mittel einen ersten Lichtsensor umfasst, der von einer ersten Polarisationsfolie überdeckt angeordnet ist, und einen zweiten Lichtsensor umfasst, der von einer zweiten Polarisationsfolie überdeckt angeordnet ist,
wobei erste und zweite Polarisationsfolie eine unterschiedlichen Polarisationsrichtung aufweisen. Von Vorteil ist dabei, dass eine schnelle und einfache Bestimmung der Ausrichtung des Fahrzeugs zu einer Nullrichtung, beispielswiese Nord-Richtung, ausführbar ist.

Bei einer vorteilhaften Ausgestaltung wird nach Eintreten des Fahrzeugs in den empfindlichen Bereich des Sensors eines jeweiligen stationär angeordneten Sende-Empfangsmoduls, insbesondere nach Eintreten des Fahrzeugs in den vom Lichtkegel dieses Sende-Empfangsmoduls beleuchtbaren Positionsbereichs, und nach Detektieren von von der steuerbaren Lichtquelle des Sende-Empfangsmoduls des Fahrzeugs abgestrahlten Lichts mittels des am stationär angeordneten Sende-Empfangsmodul angeordneten Sensors die steuerbare Lichtquelle des stationär angeordneten Sende-Empfangsmoduls derart angesteuert, dass zumindest der Positionsbereich beleuchtet wird, insbesondere mit oder ohne Modulation des vom stationär angeordneten Sende-Empfangsmoduls abgestrahlten Lichts. Von Vorteil ist dabei, dass die Umgebung jedes Fahrzeugs beleuchtet ist und diejenigen Zonen, also von einem Lichtkegel abdeckbaren Positionsbereiche, in welchen kein Fahrzeug vorhanden ist, nicht beleuchtet werden, so dass Energie einsparbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine schematische Seitenansicht einer erfindungsgemäßen Anlage mit Fahrzeug 1 gezeigt.
In der Figur 2 ist ein Ausschnitt zu einer schematischen Seitenansicht einer weiteren erfindungsgemäßen Anlage mit einem anderen Fahrzeug 1 gezeigt.
In der Figur 3 ist die Abhängigkeit der Lichtintensität I vom Verdrehwinkel des Fahrzeugs 1 gezeigt.
In der Figur 4 ist eine schematische Draufsicht auf das Fahrzeug in zwei Verdrehwinkelzuständen , die um den Verdrehwinkel α gegeneinander verdreht sind, gezeigt.

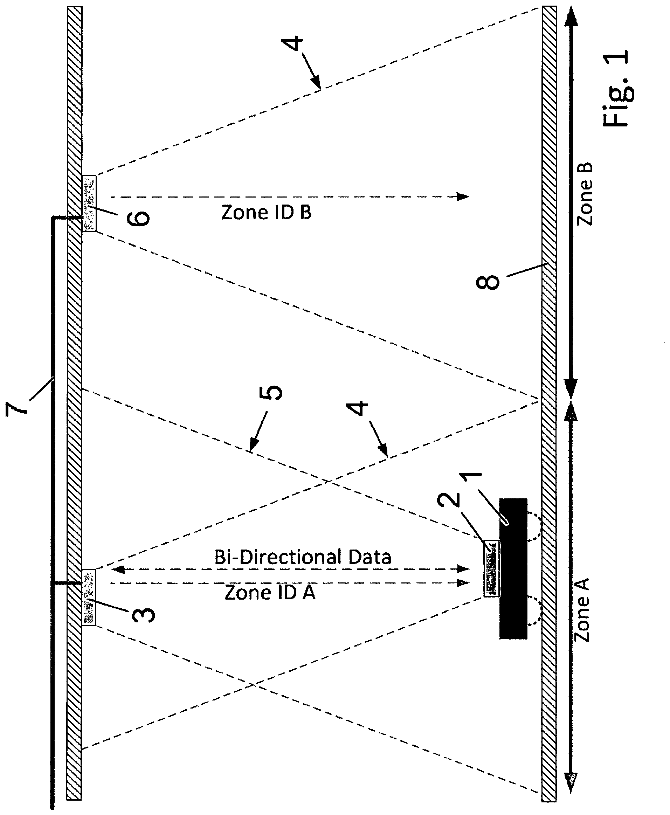

Wie in Figur 1 gezeigt, weist die Anlage einen Boden 8 mit Verfahrfläche auf, auf dem ein Fahrzeug 1 verfahrbar ist.

Das Fahrzeug 1 weist an seiner Oberseite Sende-Empfangs-Modul auf, das einerseits eine steuerbare Lichtquelle 2 aufweist und andererseits einen Lichtsensor aufweist. Dabei arbeiten die Lichtquelle und der Sensor entweder mit Infrarotlicht oder sichtbarem Licht. Der Sendekegel ist mit dem Bezugszeichen 5 bezeichnet.

An der Oberseite des Innenraums der Anlage sind Sende-Empfangsmodule angeordnet, die jeweils eine steuerbare Lichtquelle 2 aufweisen und andererseits einen Lichtsensor aufweisen.

Dabei ist der von der jeweiligen Lichtquelle beleuchtbare Bereich, also Sendekegel, mit dem Bezugszeichen 4 bezeichnet.

Somit ist durch entsprechendes Ansteuern der Lichtquellen 2 und dadurch bewirktes Modulieren der Intensität des jeweils abgestrahlten Lichts ein bidirektionaler Datenaustausch durch Intensitäts-moduliertes Licht, insbesondere sichtbares Licht oder Infrarotlicht, ausführbar.

Außerdem ist von der jeweiligen Lichtquelle auch eine Identitätsinformation, also Information über die Identität der strahlenden Lichtquelle, abstrahlbar.

Durch Auswerten der empfangenen Information, insbesondere also auch Erkennen der Identität der strahlenden Lichtquelle, mittels der am Fahrzeug angeordneten Signalelektronik ist die Position des Fahrzeugs, also die durch den Sendekegel beleuchtete Zone, erkennbar. Daher ist die Auflösung bei dieser Positionsbestimmung nur in der Größenordnung der Ausdehnung der von den Lichtquellen beleuchtbaren Zonen. Wenn eine Überlappung der Sendekegel 4 vorhanden ist, ist sogar eine verbesserte Auflösung erreichbar, da unterschieden werden kann zwischen dem Überlappungsbereich zweier zueinander benachbarten Zonen und dem nur von einer der Lichtquellen (3, 6) bestrahlten Bereich.

Die Lichtquellen werden über ein Kabel 7 versorgt, das nicht nur mit elektrischer Energie versorgt sondern auch die zu übertragenden Daten aufweist, indem höher frequente Stromanteile als diejenige Frequenz, welche zur Energieversorgung der Leuchtquellen verwendet wird, verwendet werden. Die Leuchtquellen samt deren entsprechende Ansteuersignale erzeugende Ansteuerelektronik sind dabei elektrisch parallel geschaltet und mittels des Kabels 7 versorgt.

Alternativ ist jede der Leuchtquellen (3, 6) direkt mittels eines Kabels aus einer zentralen Steuerung versorgt und benötigt somit keine Ansteuersignale erzeugende Elektronik. Somit ist die von der jeweiligen Lichtquelle abgestrahlte Lichtintensität proportional zur von der zentralen Steuerung gelieferten Spannung.

In entsprechender Weise ist eine Datenübertragung vom Fahrzeug 1 zu einem an der Lichtquelle (3, 6) angeordneten stationären Lichtsensor ermöglicht. Es wird also das von der steuerbaren Lichtquelle 2 abgestrahlte Licht vom Lichtsensor empfangen und die empfangenen Signale über einen Datenübertragungskanal und/oder über das Kabel 7 an die zentrale Steuerung übertragen.

Die steuerbaren Lichtquellen (3, 6) werden derart angesteuert, dass eine erste der Lichtquellen (3, 6) in einem ersten Zeitabschnitt und eine zweite in einem zeitlich nachfolgenden Zeitabschnitt Licht abstrahlen. Auf diese Weise ist sogar dieselbe Modulationsfrequenz des Lichtes erkennbar.

Zur Informationsübertragung beträgt die Modulationsfrequenz zwischen 0,5 MHz und 5 MHz.

Bei Verwendung von sichtbarem Licht wird der Innenraum der Anlage insbesondere durch die stationär angeordneten Lichtquellen (3, 6) beleuchtet. Somit sind die Beleuchtungsmittel der Anlage auch zur Datenübertragung verwendet.

Mittels der stationär angeordneten, steuerbaren Lichtquellen (3, 6) ist ein Synchronisationspuls absendbar, der von allen diesen stationär angeordneten, steuerbaren Lichtquellen (3, 6) gleichzeitig abgesendet wird. Somit sind mehrere Maschinen synchronisiert betreibbar, beispielsweise sind die Maschinen synchron startbar und werden gleichzeitig gemäß einer Drehzahl-Hochlauframpe auf ihre Solldrehzahl gebracht. Dies ist beispielsweise bei einem Fließband mit mehreren Antrieben oder bei einem Ausführen einer gemeinsamen Transportaufgabe durch mehrere gleichartig ausgeführte Fahrzeuge 1 wichtig. In jedem Fall weisen die Antriebe oder Fahrzeuge 1 wiederum die vorbeschriebenen Lichtsensoren auf.

Es ist also nicht nur eine Datenübertragung sondern auch ein Synchronisationspuls-Übertragung ausführbar.

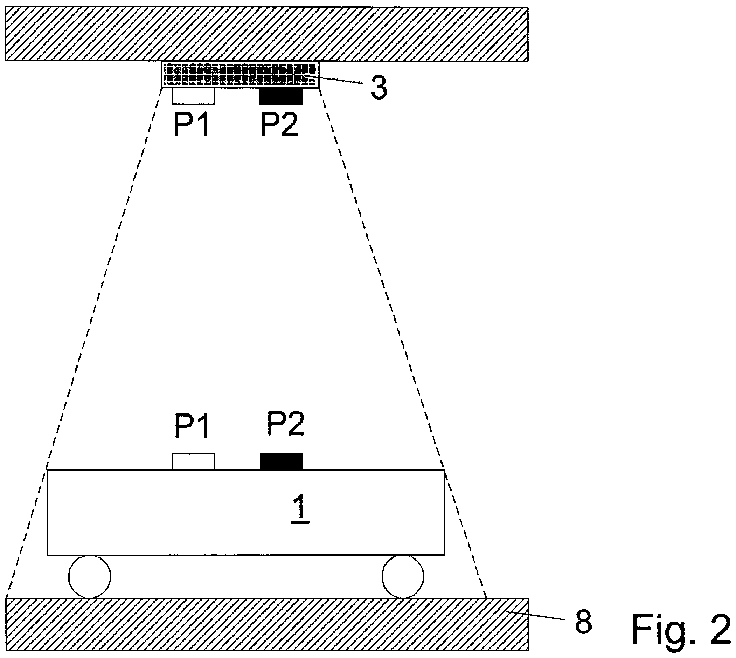

Wie in Figur 2 schematisch skizziert, sind bei einem weiteren erfindungsgemäßen Ausführungsbeispiel die steuerbaren Lichtquellen (2, 3, 6), also die stationär angeordneten Lichtquellen (3, 6) und die am Fahrzeug angeordnete Lichtquelle 2, jeweils zweifach ausgeführt, wobei die erste der Lichtquellen mit der ersten Polarisationsfolie P1 und die zweite mit der zweiten Polarisationsfolie P2 zumindest teilweise abgedeckt sind. Dabei ist die Polarisationsrichtung der Polarisationsfolie P1 senkrecht ausgerichtet ist zur Polarisationsrichtung der Polarisationsfolie P2. Somit ist bei Ansteuerung der jeweils ersten Lichtquelle Licht mit einer anderen Polarisationsrichtung abstrahlbar als bei Ansteuerung der jeweils zweiten Lichtquelle.

Zusammen mit der jeweils ersten und zweiten Lichtquelle (2, 3, 6) ist jeweils ein erster, zum jeweiligen entsprechenden Sende-Empfangsmodul gehörende Lichtsensor und ein zweiter Lichtsensor auch von den Polarisationsfolien abgedeckt. Dabei deckt die erste Polarisationsfolie P1 nicht nur die jeweils erste Lichtquelle sondern auch den jeweils ersten Lichtsensor und die zweite Polarisationsfolie P2 nicht nur die jeweils zweite Lichtquelle sondern auch den jeweils zweiten Lichtsensor des Sende-Empfangsmoduls ab.

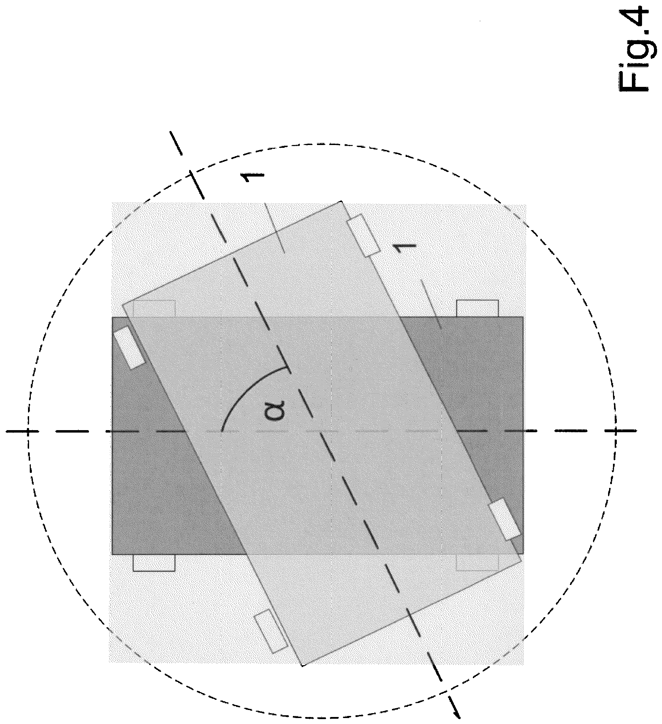

Wie in Figur 4 gezeigt, ist die Ausrichtung des Fahrzeugs 1 in der Verfahrebene durch einen Verdrehwinkel α kennzeichenbar. Dabei wird dieser Winkel gegen die Nordrichtung gemessen.

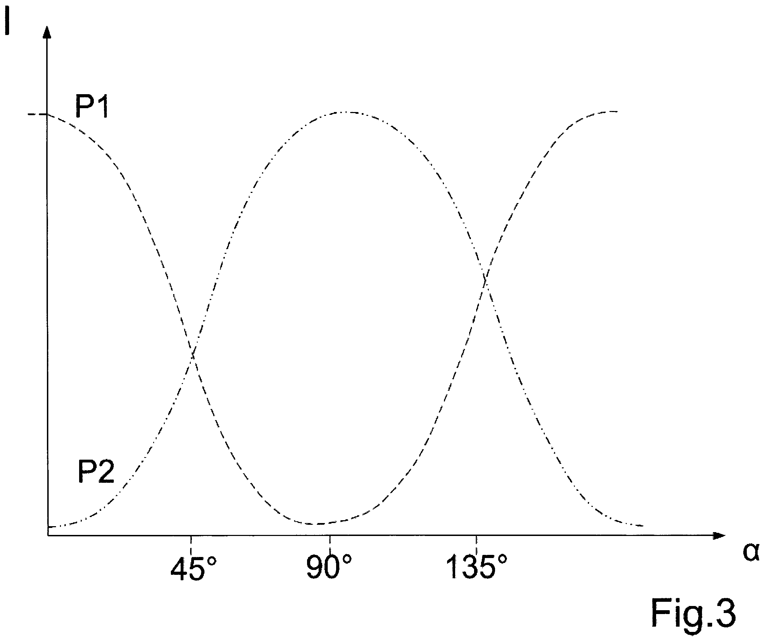

Wie in Figur 3 gezeigt, wird mittels der Lichtsensoren ein von dem Verdrehwinkel α abhängiger Intensitätswert gemessen, wobei die Signale des ersten und des zweiten Lichtsensors eine Winkelverschiebung von 90° zueinander aufweisen, wobei der erste Lichtsensor unter der Polarisationsfolie P1 und der zweite Lichtsensor unter der Polarisationsfolie P2 angeordnet ist.

Wenn also die jeweilige erste Lichtquelle der steuerbaren Lichtquelle 3 Licht aussendet, wird die Polarisationsrichtung dieses ausgesendeten Lichts durch die Polarisationsfolie P1 festgelegt. Mittels der mit dem ersten und zweiten Lichtsensor, die am Fahrzeug angeordnet sind, detektierten Lichtintensitätswerte, ist die Ausrichtung des Fahrzeugs bestimmbar, wobei vorzugsweise die Kennlinien gemäß Figur 3 verwendet werden.

Die Polarisationsfolien P1 und P2 sind im Wesentlichen parallel zueinander angeordnet.

Zur Verbesserung der Messgenauigkeit der Ausrichtung wird nach einem Zeitabschnitt die jeweilige erste Lichtquelle der steuerbaren Lichtquelle 3 abgeschaltet und die zweite Lichtquelle der steuerbaren Lichtquelle angeschaltet. Wiederum wird dann gemäß der Kennlinie nach Figur 3 die Ausrichtung bestimmt.

Durch zusätzliches Modulieren der Lichtquelle sind gleichzeitig während der Bestimmung der Ausrichtung auch Informationen übertragbar.

Für die Datenübertragung vom Fahrzeug an die stationär angeordnete zentrale Steuerung wird die erste, hinter der Polarisationsfolie P1 angeordnete steuerbare Lichtquelle des Fahrzeugs angesteuert und das erzeugte Licht von dem ersten Lichtsensor, der hinter der Polarisationsfolie P1 des Sende-Empfangs-Moduls 3 angeordnet ist, detektiert und von dem zweiten Lichtsensor, der hinter der Polarisationsfolie P2 desselben Sende-Empfangs-Moduls 3 angeordnet ist, detektiert. Somit ist wiederum eine Datenübertragung ermöglicht und sogar gleichzeitig eine Bestimmung der Ausrichtung des Fahrzeugs von der stationären Seite aus. Somit sind die Ergebnisse der Bestimmung der Ausrichtung des Fahrzeugs übermittelbar und der statistischen Fehler bei der Bestimmung durch Mittelwertbildung verringerbar. Dabei werden also auch die vom Fahrzeug aus gemessenen Ausrichtungswerte und die von der stationären Seite aus gemessenen Ausrichtungswerte kombiniert.

Das Fahrzeug 1 ist als fahrerloses Transportsystem (FTS) ausgeführt und/oder als automated guided vehicle (AGV).

Bei einem weiteren erfindungsgemäßen Ausführungsbeispiel ist zusätzlich ein weiteres Positionserfassungssystem vorhanden, so dass eine höhere Auflösung bei der vorgenannten Positionsbestimmung mittels Beleuchtungszonen erreichbar ist.

### Bezugszeichenliste

1 Fahrzeug
2 steuerbare Lichtquelle
3 steuerbare Lichtquelle
4 Sendekegel
5 Sendekegel
6 steuerbare Lichtquelle
7 Kabel
8 Boden mit Verfahrfläche
P1 erstes Polarisationsfilter
P2 zweites Polarisationsfilter
I Lichtintensität
α Verdrehwinkel

## Patentansprüche

1. System für eine Anlage,
aufweisend stationär angeordnete Sende-Empfangsmodule und ein Fahrzeug (1) mit Sende-Empfangsmodul,
wobei das jeweilige Sende-Empfangsmodul eine steuerbare Lichtquelle (2, 3, 6) und einen Lichtsensor aufweist, so dass eine Datenübertragung zwischen dem Fahrzeug (1) und den stationär angeordneten Modulen mittels Lichtmodulation ausführbar ist,
**dadurch gekennzeichnet, dass**
jedes Modul zwei Polarisationsfolien (P1, P2) aufweist, deren Polarisationsrichtung sich
unterscheidet,
wobei die erste der Polarisationsfolien eine erste steuerbare Lichtquelle (2, 3, 6) und einen ersten Lichtsensor abdeckt und die zweite der Polarisationsfolien eine zweite steuerbare Lichtquelle (2, 3, 6) und einen zweiten Lichtsensor abdeckt.

2. System nach Anspruch 1,
**dadurch gekennzeichnet, dass**
das verwendete Licht sichtbares Licht oder Infrarotlicht ist.

3. System nach mindestens einem der vorangegangenen Ansprüche,
**dadurch gekennzeichnet, dass**
die Datenübertragung bidirektional ausführbar ist.

4. System nach mindestens einem der vorangegangenen Ansprüche,
**dadurch gekennzeichnet, dass**
die von einem jeweiligen stationär angeordneten Modul ausgesendeten Lichtkegel mit dem Lichtkegel eines weiteren Moduls überlappt.

5. System nach mindestens einem der vorangegangenen Ansprüche,
**dadurch gekennzeichnet, dass**
das jeweilige stationär angeordnete Sende-Empfangsmodul ein Mittel zum Ansteuern der steuerbaren Lichtquelle (2, 3, 6) aufweist,
wobei nach Eintreten des Fahrzeugs (1) in den empfindlichen Bereich des Sensors des stationär angeordneten Sende-Empfangsmoduls, insbesondere nach Eintreten des Fahrzeugs (1) in den vom Lichtkegel bedeckbaren Positionsbereich, und nach Detektieren von vom Sende-Empfangsmodul des Fahrzeugs (1) abgestrahlten Lichts mittels des am stationär angeordneten Sende-Empfangsmodul angeordneten Sensors das Mittel zum Ansteuern der steuerbaren Lichtquelle (2, 3, 6) diese ansteuert, so dass zumindest der Positionsbereich beleuchtet ist.

6. System nach mindestens einem der vorangegangenen Ansprüche,
**dadurch gekennzeichnet, dass**
das Fahrzeug (1) einen Speicher aufweist, in welchem die Positionen der stationär angeordneten Module und/oder die den Positionen zugeordneten Zonen, also Positionsbereiche, gespeichert sind,
wobei die stationär angeordneten Module jeweils Identitätsinformation übertragen an das Fahrzeug (1), so dass das Fahrzeug (1) aus der Identitätsinformation des stationären Moduls die gespeicherte Position oder die zugeordnete Zone ermittelt.

7. System nach mindestens einem der vorangegangenen Ansprüche,
**dadurch gekennzeichnet, dass**
stationär und/oder am Fahrzeug (1) ein Mittel zur Bestimmung der Ausrichtung **des** Fahrzeugs (1) angeordnet ist, insbesondere wobei das Mittel ein Auswertemittel aufweist, dem die Signale eines ersten und eines zweiten Lichtsensors zugeführt werden.

8. System nach mindestens einem der vorangegangenen Ansprüche,
**dadurch gekennzeichnet, dass**
zur Datenübertragung die Lichtintensität einer jeweiligen steuerbaren Lichtquelle (2, 3, 6) moduliert wird.

9. System nach mindestens einem der vorangegangenen Ansprüche,
**dadurch gekennzeichnet, dass**
die stationär angeordneten, steuerbaren Lichtquellen (2, 3, 6) auch als Beleuchtung der Anlage fungieren.

10. System nach mindestens einem der vorangegangenen Ansprüche,
**dadurch gekennzeichnet, dass**
das am Fahrzeug (1) angeordnete Modul an der Oberseite des Fahrzeugs (1) angeordnet ist.

11. System nach mindestens einem der vorangegangenen Ansprüche,
**dadurch gekennzeichnet, dass**
die stationär angeordneten steuerbaren Lichtquellen (2, 3, 6) aus einem elektrischen Kabel versorgt sind, das einen ersten Stromanteil zur Energieversorgung der Lichtquellen (2, 3, 6) aufweist und einen höher frequent als die Frequenz des ersten Stromanteils aufmodulierten zweiten Stromanteil zur Datenübertragung,
wobei das Kabel mit einer zentralen Steuerung verbunden ist.

12. Verfahren zum Betreiben eines Systems nach mindestens einem der vorangegangenen Ansprüche,
wobei zwischen dem Fahrzeug (1) und einem der stationär angeordneten Module Daten übertragen werden mittels Lichtmodulation
und/oder von allen stationär angeordneten Modulen gleichzeitig ein Synchronisationssignal gesendet wird, insbesondere für Fahrzeuge oder stationär angeordnete Maschinen, wobei die Fahrzeuge und Maschinen jeweils einen Lichtsensor zum Detektieren des von einer oder mehreren steuerbare Lichtquellen (2, 3, 6) des jeweiligen Moduls gesendeten Lichts aufweisen
**dadurch gekennzeichnet, dass**
von einem stationär angeordneten Modul polarisiertes Licht gesendet wird,
wobei am Fahrzeug (1) ein Mittel zur Bestimmung der Polarisationsrichtung des Lichts angeordnet ist, wobei das Mittel einen ersten Lichtsensor umfasst, der von einer ersten Polarisationsfolie (P1) überdeckt angeordnet ist, und einen zweiten Lichtsensor umfasst, der von einer zweiten Polarisationsfolie (P2) überdeckt angeordnet ist,
wobei erste und zweite Polarisationsfolie eine unterschiedlichen Polarisationsrichtung aufweisen.

13. Verfahren nach Anspruch 12,
**dadurch gekennzeichnet, dass**
nach Eintreten des Fahrzeugs (1) in den empfindlichen Bereich des Sensors eines jeweiligen stationär angeordneten Sende-Empfangsmoduls, insbesondere nach Eintreten des Fahrzeugs (1) in den vom Lichtkegel dieses Sende-Empfangsmoduls beleuchtbaren Positionsbereichs, und nach Detektieren von von der steuerbaren Lichtquelle (2, 3, 6) des Sende-Empfangsmoduls des Fahrzeugs (1) abgestrahlten Lichts mittels des am stationär angeordneten Sende-Empfangsmodul angeordneten Sensors die steuerbare Lichtquelle (2, 3, 6) des stationär angeordneten Sende-Empfangsmoduls derart angesteuert wird, dass zumindest der Positionsbereich beleuchtet wird, insbesondere mit oder ohne Modulation des vom stationär angeordneten Sende-Empfangsmoduls abgestrahlten Lichts.

## Claims

1. A system for an installation,
having stationarily arranged transceiver modules and a vehicle (1) having a transceiver module,
wherein the respective transceiver module has a controllable light source (2, 3, 6) and a light sensor so that data transfer between the vehicle (1) and the stationarily arranged modules may be carried out by means of light modulation,
**characterised in that**
each module has two polarisation films (P1, P2) whereof the polarisation direction differs,
wherein the first of the polarisation films covers a first controllable light source (2, 3, 6) and a first light sensor and the second of the polarisation films covers a second controllable light source (2, 3, 6) and a second light sensor.

2. A system according to Claim 1,
**characterised in that**
the light used is visible light or infrared light.

3. The system according to at least one of the preceding claims,
**characterised in that**
the data transfer may be carried out bidirectionally.

4. The system according to at least one of the preceding claims,
**characterised in that**
the light cone emitted by a respective stationarily arranged module overlaps the light cone of a further module.

5. The system according to at least one of the preceding claims,
**characterised in that**
the respective stationarily arranged transceiver module has a means for controlling the controllable light source (2, 3, 6),
wherein, after the vehicle (1) enters the sensitive range of the sensor of the stationarily arranged transceiver module, in particular after the vehicle (1) enters the position range which may be covered by the light cone, and after the sensor arranged on the stationarily arranged transceiver module has detected light emitted by the transceiver module of the vehicle (1), the means for controlling the controllable light source (2, 3, 6) controls this so that at least the position range is illuminated.

6. The system according to at least one of the preceding claims,
**characterised in that**
the vehicle (1) has a memory in which the positions of the stationarily arranged modules and/or the zones associated with the positions, i.e. position ranges, are stored, wherein the stationarily arranged modules each transfer identity information to the vehicle (1) so that the vehicle (1) determines the stored position or the associated zone from the identity information of the stationary module.

7. The system according to at least one of the preceding claims,
**characterised in that**
a means for establishing the alignment of the vehicle (1) is arranged stationarily and/or on the vehicle (1), in particular wherein the means has an evaluation means to which the signals of a first and a second light sensor are supplied.

8. The system according to at least one of the preceding claims,
**characterised in that**
the light intensity of a respective controllable light source (2, 3,6) is modulated for data transfer.

9. The system according to at least one of the preceding claims,
**characterised in that**
the stationarily arranged controllable light sources (2, 3, 6) also serve to illuminate the installation.

10. The system according to at least one of the preceding claims,
**characterised in that**
the module arranged on the vehicle (1) is arranged on the upper side of the vehicle (1).

11. The system according to at least one of the preceding claims
**characterised in that**
the stationarily arranged controllable light sources (2, 3, 6) are supplied by an electrical cable which has a first current component for supplying energy to the light sources (2, 3, 6) and a second current component for data transfer, which is modulated to a higher frequency than the frequency of the first current component,
wherein the cable is connected to a central control.

12. A method for operating a system according to at least one of the preceding claims,
**wherein** data are transferred between the vehicle (1) and one of the stationarily arranged modules by means of light modulation
and/or a synchronisation signal is emitted simultaneously by all stationarily arranged modules, in particular for vehicles or stationarily arranged machines, wherein the vehicles and machines each have a light sensor for detecting the light emitted by one or more controllable light sources (2, 3, 6) of the respective module, **characterised in that**
polarised light is emitted by a stationarily arranged module,
wherein a means for establishing the polarisation direction of the light is arranged on the vehicle (1), wherein the means comprises a first light sensor, which is arranged covered by a first polarisation film (P1), and a second light sensor which is arranged covered by a second polarisation film (P2),
wherein the first and second polarisation film have a different polarisation direction.

13. The method according to Claim 12,
**characterised in that**
after the vehicle (1) enters the sensitive range of the sensor of a respective stationarily arranged transceiver module, in particular after the vehicle (1) enters the position range which may be illuminated by the light cone of this transceiver module, and after the sensor arranged on the stationarily arranged transceiver module has detected light emitted by the controllable light source (2, 3, 6) of the transceiver module of the vehicle (1), the controllable light source (2, 3, 6) of the stationarily arranged transceiver module is controlled in such a way that at least the position range is illuminated, in particular with or without modulation of the light emitted by the stationarily arranged transceiver module.

## Revendications

1. Système pour une installation,
présentant des modules émetteurs-récepteurs disposés stationnairement et un véhicule (1) équipé d'un module émetteur-récepteur,
sachant que le module émetteur-récepteur respectif présente une source lumineuse pouvant être commandée (2, 3, 6) et un capteur de lumière, de sorte qu'une transmission de données peut être réalisée par modulation de lumière entre le véhicule (1) et les modules disposés stationnairement,
**caractérisé en ce que** chaque module présente deux films polarisants (P1, P2) dont les directions de polarisation sont différentes,
sachant que le premier des films polarisants couvre une première source lumineuse pouvant être commandée (2, 3, 6) et un premier capteur de lumière et que le deuxième des films polarisants couvre une deuxième source lumineuse pouvant être commandée (2, 3, 6) et un deuxième capteur de lumière.

2. Système selon la revendication 1, **caractérisé en ce que** la lumière utilisée est la lumière visible ou la lumière infrarouge.

3. Système selon au moins une des revendications précédentes, **caractérisé en ce que** la transmission de données peut être réalisée de manière bidirectionnelle.

4. Système selon au moins une des revendications précédentes, **caractérisé en ce que** le cône de lumière émis par un module respectif disposé stationnairement chevauche le cône de lumière d'un autre module.

5. Système selon au moins une des revendications précédentes, **caractérisé en ce que** le module émetteur-récepteur respectif disposé stationnairement présente un moyen destiné à commander la source lumineuse pouvant être commandée (2, 3, 6), sachant qu'à la suite de l'entrée du véhicule (1) dans la zone sensible du capteur du module émetteur-récepteur disposé stationnairement, en particulier à la suite de l'entrée du véhicule (1) dans la zone de positions pouvant être couverte par le cône de lumière, et à la suite de la détection de la lumière diffusée par le module émetteur-récepteur du véhicule (1) au moyen du capteur disposé sur le module émetteur-récepteur disposé stationnairement, le moyen destiné à commander la source lumineuse pouvant être commandée (2, 3, 6) commande celle-ci de telle sorte qu'au moins la zone de positions est éclairée.

6. Système selon au moins une des revendications précédentes, **caractérisé en ce que** le véhicule (1) présente une mémoire dans laquelle sont mémorisées les positions des modules disposés stationnairement et/ou les zones associées aux positions, donc les zones de positions,
sachant que les modules disposés stationnairement transmettent respectivement des informations d'identité au véhicule (1), de sorte que le véhicule (1) détermine, à partir de l'information d'identité du module stationnaire, la position mémorisée ou la zone associée.

7. Système selon au moins une des revendications précédentes, **caractérisé en ce qu'**un moyen pour déterminer l'orientation du véhicule (1) est disposé stationnairement et/ou sur le véhicule (1), sachant en particulier que le moyen présente un moyen d'évaluation auquel sont apportés les signaux d'un premier et d'un deuxième capteurs de lumière.

8. Système selon au moins une des revendications précédentes, **caractérisé en ce que** l'intensité lumineuse d'une source lumineuse pouvant être commandée (2, 3, 6) respective est modulée pour la transmission de données.

9. Système selon au moins une des revendications précédentes, **caractérisé en ce que** les sources lumineuses pouvant être commandées (2, 3, 6), disposées stationnairement, jouent également le rôle d'éclairage de l'installation.

10. Système selon au moins une des revendications précédentes, **caractérisé en ce que** le module disposé sur le véhicule (1) est disposé sur le dessus du véhicule (1).

11. Système selon au moins une des revendications précédentes, **caractérisé en ce que** les sources lumineuses pouvant être commandées (2, 3, 6), disposées stationnairement, sont alimentées à partir d'un câble électrique qui présente une première composante de courant pour l'alimentation en énergie des sources lumineuses (2, 3, 6), et une deuxième composante de courant pour la transmission de données, modulée à une fréquence supérieure à la fréquence de la première composante de courant,
sachant que le câble est relié à une commande centrale.

12. Procédé pour faire fonctionner un système selon au moins une des revendications précédentes,
sachant que des données sont transmises par modulation de lumière entre le véhicule (1) et un des modules disposés stationnairement,
et/ou qu'un signal de synchronisation est émis simultanément par tous les modules disposés stationnairement, en particulier pour des véhicules ou pour des machines disposées stationnairement, sachant que les véhicules et machines présentent respectivement un capteur de lumière pour détecter la lumière émise par une ou plusieurs sources lumineuses pouvant être commandées (2, 3, 6) du module respectif, **caractérisé en ce que** de la lumière polarisée est émise par un module disposé stationnairement,
sachant qu'un moyen pour déterminer la direction de polarisation de la lumière est disposé sur le véhicule (1), sachant que le moyen comprend un premier capteur de lumière qui est disposé en étant recouvert par un premier film polarisant (P1), et comprend un deuxième capteur de lumière qui est disposé en étant recouvert par un deuxième film polarisant (P2),
sachant que le premier et le deuxième films polarisants présentent des directions de polarisation différentes.

13. Procédé selon la revendication 12, **caractérisé en ce qu'**à la suite de l'entrée du véhicule (1) dans la zone sensible du capteur d'un module émetteur-récepteur respectif disposé stationnairement, en particulier à la suite de l'entrée du véhicule (1) dans la zone de positions pouvant être éclairée par le cône de lumière de ce module émetteur-récepteur, et à la suite de la détection de la lumière diffusée par la source lumineuse pouvant être commandée (2, 3, 6) du module émetteur-récepteur du véhicule (1) au moyen du capteur disposé sur le module émetteur-récepteur disposé stationnairement, la source lumineuse pouvant être commandée (2, 3, 6) du module émetteur-récepteur disposé stationnairement est commandée de telle sorte qu'au moins la zone de positions est éclairée, en particulier avec ou sans modulation de la lumière diffusée par le module émetteur-récepteur disposé stationnairement.
